# EUROPEAN PATENT SPECIFICATION

(11) **EP 2 839 916 B1**
(45) Date of publication and mention of the grant of the patent: **23.01.2019**
(21) Application number: 12874722.7
(22) Date of filing: 16.04.2012
(51) Int. Cl.: B23H 7/04, B23H 1/02, B23H 7/02, B23Q 17/00

(54) **MACHINE TOOL**
WERZEUGMASCHINE
MACHINE-OUTIL

(43) Date of publication of application: 25.02.2015
(73) Proprietor: Makino Milling Machine Co., Ltd., Tokyo 152-8578 (JP)
(72) Inventor: KIMURA, Tadashi, Aiko-gun Kanagawa 243-0303 (JP)
(74) Representative: Thum, Bernhard
(86) International application number: PCT/JP2012/060262
(87) International publication number: WO 2013/157071

(56) References cited:
- EP-A1- 2 085 776
- EP-A2- 2 465 639
- JP-A- H1 097 312
- JP-A- H1 097 312
- JP-A- H01 188 228
- JP-A- H04 269 119
- JP-A- H04 269 119
- JP-A- H05 210 410
- JP-A- 2008 296 314
- US-A1- 2007 051 701
- US-B1- 6 610 956
- US-B1- 6 721 621

## Description

### TECHNICAL FIELD

The present invention relates to a machine tool which has a display function of displaying a working state.

### BACKGROUND ART

In the past, there has been known a system which detects physical quantities which represent a working state of an electro-discharge machine, stores the detected values, and, when a display command is input, displays the stored detected values at a display part (for example, see Patent Literature 1). The system which is described in Patent Literature 1 displays an average working current, working speed, working fluid temperature, wire tension, etc. at the display part. The average working current, average working voltage, and wire tension are also displayed as ratios with their maximum values by bar graphs.

In this regard, in an electro-discharge machine or other machine tool, if the machine is normal in state, the physical quantities which represent the state of the machine (for example, the working speed) fall in predetermined normal ranges. As opposed to this, when the physical quantities exceed the normal ranges, if continuing to operate the machine as it is, a drop in working efficiency of a workpiece, damage to the machine, or some other sort of issue is liable to arise. For this reason, the system is preferably configured so that an operator can quickly recognize if the physical quantities are in the normal ranges.

However, the system which is described in Patent Literature 1 only displays the detected physical quantities. An operator cannot just look at the display and easily judge if the machine is normal in state. In particular, in an electro-discharge machine, the normal ranges of physical quantities change in accordance with the rough working or finish working or other working conditions, so judging if a machine is normal in state becomes much more difficult.

Patent Literature 2 discloses the preamble of independent claim 1 and describes a display device which is configured to display a single range image, which may be a normal range image, of a meter image for one physical quantity, such as voltage and current. On the other hand, the display device is configured to display another single range image, which may be a normal-to-abnormal range image, of the meter image. Further relevant prior art can be found in Patent Literature 3.

### CITATIONS LIST

### PATENT LITERATURE

Patent Literature 1: Japanese Patent Publication No. 6-8054A
Patent Literature 2: JP H10 97312 A
Patent Literature 3: US 6 610 956 B1

### SUMMARY OF INVENTION

The machine tool according to the present invention includes the features of the independent claim, in particular: a detecting part configured to detect a physical quantity representing a state of a machine tool, a normal range of the physical quantity changing in accordance with working conditions; a setting part configured to set a normal range and an abnormal range of the physical quantity in accordance with the working conditions; and a display part configured to display a detected value detected by the detecting part and the normal range and the abnormal range set by the setting part. Preferable embodiments are provided in the dependent claims.

### BRIEF DESCRIPTION OF DRAWINGS

FIG. 1 is a front view which shows a schematic configuration of a wire electro-discharge machine to which the present invention is applied.
FIG. 2 is a circuit diagram which shows feed lines of working fluid in the wire electro-discharge machine of FIG. 1.
FIG. 3 is a block diagram which shows a schematic configuration of a display device of a machine tool according to an embodiment of the present invention.
FIG. 4 is a view which shows one example of normal ranges, warning ranges, and abnormal ranges which are set
   by a setting part of FIG. 3.
FIG. 5 is a view which shows one example of a workpiece working screen which is displayed at a display part of FIG. 3.
FIG. 6A is a view which shows one example of an image which displays a working speed at the time of rough working.
FIG. 6B is a view which shows one example of an image which displays a working speed at the time of finish working.
FIG. 7A is a view which shows one example of an image which displays a working fluid pressure at the time of rough working.
FIG. 7B is a view which shows one example of an image which displays a working fluid pressure at the time of finish working.
FIG. 8A is a view which shows one example of an image which displays a water quality at the time of rough working.
FIG. 8B is a view which shows one example of an image which displays a water quality at the time of finish working.

### DESCRIPTION OF EMBODIMENTS

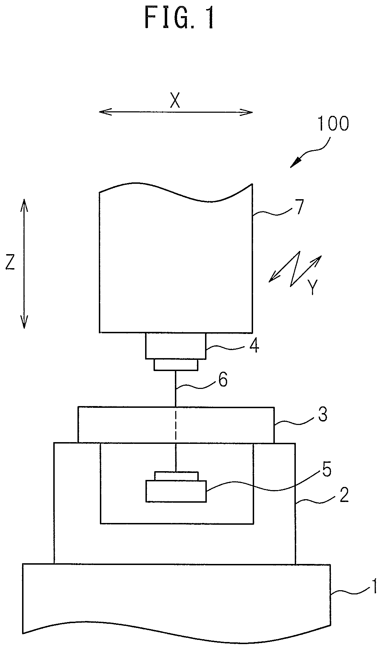

Below, referring to FIG. 1 to FIG. 8B, an embodiment of a machine tool according to the present invention will be explained. Below, the case of use of a machine tool constituted by a wire electro-discharge machine will be explained, but another machine tool may also be used.

FIG. 1 is a front view which shows the general configuration of a wire electro-discharge machine 100 to which the present invention is applied. As shown in FIG. 1, at the top of a bed 1, a workpiece table 2 is placed. On the workpiece table 2, a workpiece 3 is supported. Above and below the workpiece 3, an upper head 4 and a lower head 5 are arranged coaxially with each other while straddling the workpiece 3. Between the upper head 4 and lower head 5, a wire electrode 6 is supported along a vertical direction. The wire electrode 6 is wound around a reel, etc., and at the time of working a workpiece, is fed between the heads 4 and 5 by a not shown feeding means.

The upper head 4 is attached to a lower end of a quill 7. The quill 7 is provided slidably in an X-direction, Y-direction, and Z-direction by a respective not shown X-axis slide mechanism, Y-axis slide mechanism, and Z-axis slide mechanism, i.e., in three perpendicular axial directions. The slide mechanisms are, for example, comprised of ball screws and servo motors, etc., for driving to rotate the ball screws. The lower head 5 is integrally connected with the upper head 4 via a not shown support arm.

Due to this, the upper head 4 and the lower head 5 can move integrally in the X-axial direction and the Y-axial direction. The wire electrode 6 is maintained in a vertical posture while being made to move relative to the workpiece 3 in the X-axial direction and the Y-axial direction. While not illustrated, the wire electro-discharge machine 100 according to the present embodiment also has a U-axis slide mechanism and V-axis slide mechanism which make the upper head 4 move relative to the lower head 5 in a U-axial direction which is parallel to the X-axis and in a V-axial direction which is parallel to the Y-axis. Due to this, the wire electrode 6 can be made to incline from the vertical by a desired angle. The U-axis slide mechanism and the V-axis slide mechanism are also, for example, comprised of ball screws and servo motors which drive to rotate the ball screws, etc.

At the time of working by the wire electro-discharge machine 100, the working region of a workpiece 3 is supplied with a working fluid (for example, water). As the working fluid, instead of water, oil can also be used. Around the workpiece 3, a not shown working tank is arranged. In the working tank, a working fluid is stored. The workpiece 3 is worked in a state immersed in the working fluid.

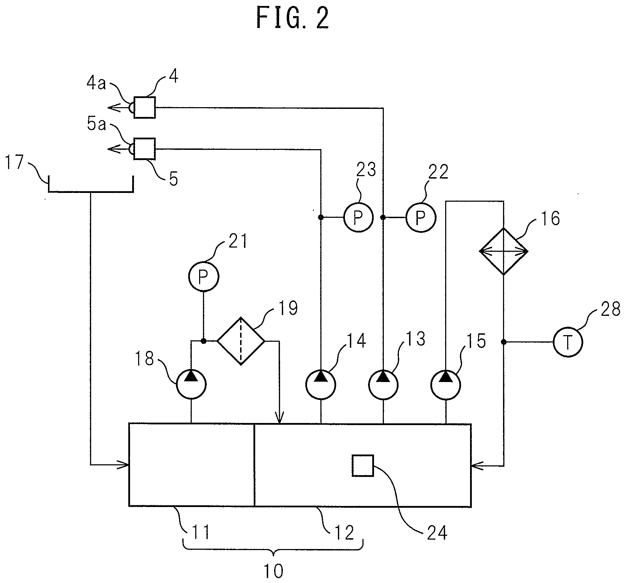

FIG. 2 is a circuit diagram which shows feed lines of the working fluid in the wire electro-discharge machine 100. The working fluid is stored in a working fluid tank 10. The working fluid tank 10 has a dirty fluid tank 11 in which pre-cleaned working fluid is stored and a clean fluid tank 12 in which cleaned working fluid is stored.

The working fluid inside the clean fluid tank 12 is pumped up by pumps 13 and 14 and injected from a jet nozzle 4a which is provided at the upper head 4 and a jet nozzle 5 which is provided at the lower head 5 to the inside of a working tank 17. Further, the working fluid in the clean fluid tank 12 is pumped up by a pump 15, is cooled by passing it through a cooling device 16, then is returned to the clean fluid tank 12. The working fluid which is ejected from the jet nozzles 4a and 5a is used for working, and then is returned from the working tank 17 to the dirty fluid tank 11. The working fluid inside of the dirty fluid tank 11 is pumped up by a pump 18 and passes through a filter 19 to remove impurities in the working fluid. The working fluid cleaned by passing through the filter 19 is sent to the clean fluid tank 12.

A pressure of the working fluid between the pump 18 and the filter 19 (filter pressure Pa) is detected by a pressure detector 21. A pressure of the working fluid between the pump 13 and the jet nozzle 4a (working fluid pressure Pb) is detected by a pressure detector 22. A pressure of the working fluid between the pump 14 and the jet nozzle 5a (working fluid pressure Pc) is detected by a pressure detector 23. A temperature T of the working fluid which passes through the cooling apparatus 16 is detected by a temperature detector 28. A property or characteristic of the working fluid inside the clean fluid tank 12 (water quality α) is detected by a water quality detector 24. The water quality detector 24 is a known sensor which measures an electroconductivity of the working fluid (for example, a resistivity meter).

The thus detected filter pressure Pa, working fluid pressures Pb and Pc, working fluid temperature T, water quality α, and other physical quantities represent the state of the machine. These physical quantities can be used as the basis to judge if the machine is normal in state. That is, these physical quantities have normal ranges set for them in advance. If the detected physical quantities are inside the normal ranges, it is judged that the machine is normal in state. For example, if the filter pressure Pa is a predetermined pressure or less, it is judged that the filter 19 is in a normal state where it is free of clogging. On the other hand, if the detected physical quantities are outside the normal ranges, it is judged that the machine is not normal in state. In this case, some sort of issue is liable to arise in the working operation, so it is preferable to configure the system so that the operator can determine at all times if the detected physical quantities are in the normal ranges. Therefore, in the present embodiment, the display device is configured in the following way.

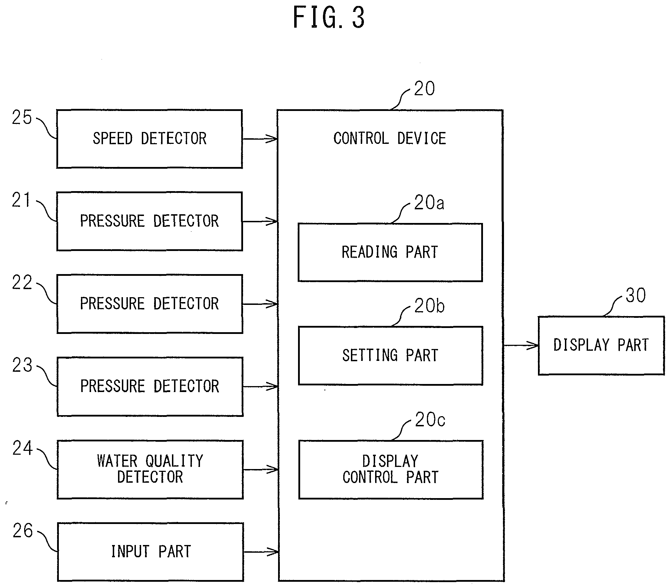

FIG. 3 is a block diagram which shows the general configuration of a machine tool according to an embodiment of the present invention. To the control device 20, a speed detector 25 which detects a speed of movement of the wire electrode 6 with respect to the workpiece 3 (working speed V), the pressure detectors 21 to 23, the water quality detector 24, the input part 26, and the display part 30 are connected.

The speed detector 25 is, for example, comprised of a rotation detector (encoder) which detects an amount of rotation of a servo motor for driving a quill (for example, X-axis servo motor or Y-axis servo motor). That is, there is a correlation between the amount of rotation of the servo motor and the position of the wire electrode 6, so the working speed V can be determined by determining the amount of change per unit time of the position of the wire electrode 6 obtained by the rotation detector. The working speed V, for example, falls when abnormal electro-discharge occurs due to degradation of the working fluid, etc. Therefore, the working speed V is also, like the filter pressure Pa or the working fluid pressures Pb and Pc, a physical quantity which represents the state of the machine. The input part 26 can be comprised of a keyboard or touch panel, etc. The display part 30 is comprised of a liquid crystal display, CRT display, etc.

The control device 20 is comprised of a processing system which includes a CPU, ROM, RAM, and other peripheral circuits, etc. The control device 20 has, as functional components, a reading part 20a, setting part 20b, and display control part 20c.

The reading part 20a reads signal from the detectors 21 to 25, various setting values input by the input part 26, the working program stored in advance in the memory, and other data. The working program may also be made to be read from outside of the control device 20, for example, from a numerical control unit which controls the wire electro-discharge machine 100.

The setting part 20b sets the normal range, warning range, and abnormal range of a physical quantity in accordance with the working conditions. An abnormal range is a range which represents an abnormal state of the machine, and is set outside of the normal range. A warning range is a range which represents a warning state before the machine becomes abnormal, and is set between the normal range and the abnormal range. That is, the warning range is set contiguous with the normal range, while the abnormal range is set contiguous with the warning range.

The working conditions are the amount of feed of the working fluid to the working region, the magnitude of a working voltage which is applied between the wire electrode 6 and the workpiece 3, and other conditions which are necessary for electro-discharge machining. The working conditions differ in accordance with the rough working, finish working, and other working content. That is, the rough working condition at the time of rough working and the finish working condition at the time of finish working differ. If the working conditions differ, the normal ranges, warning ranges, and abnormal ranges of the physical quantities differ. Therefore, these ranges are set for the individual working conditions. The finish working is sometimes divided into several states with changed working conditions. The working conditions which are used are set in the working program.

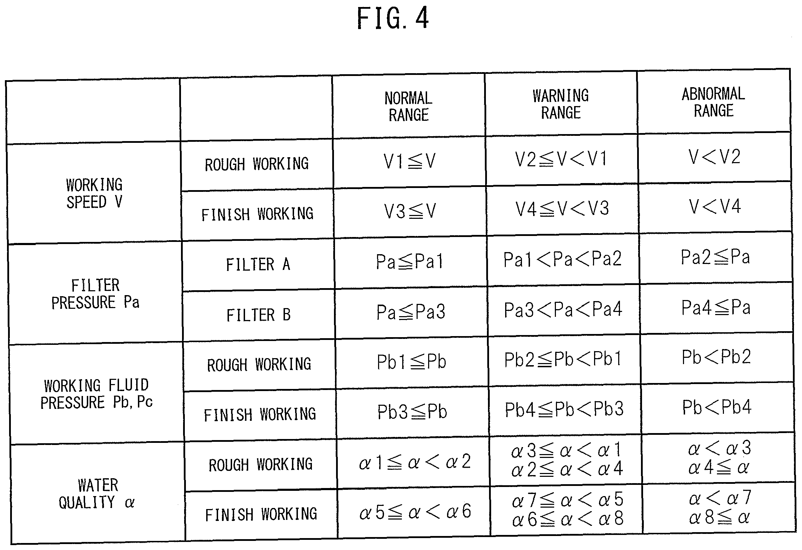

FIG. 4 is a view which shows one example of the normal ranges, warning ranges, and abnormal ranges which are set at the setting part 20b. As shown in FIG. 4, the normal range of the working speed V in the rough working condition is a predetermined value V1 or more (V1≤V), the warning range is a predetermined value V2 or more and less than the predetermined value V1 (V2≤V<V1), and the abnormal range is less than the predetermined value V2 (V<V2). On the other hand, the normal range of the working speed V in the finish working condition is a predetermined value V3 or more (V3≤V), the warning range is a predetermined value V4 or more and less than a predetermined value V3 (V4≤V<V3), and the abnormal range is less than the predetermined value V (V<V4). At the time of finish working, the working speed V is faster than the time of rough working, so the predetermined value V3 is larger than the predetermined value V1, and the predetermined value V4 is larger than the predetermined value V2.

The normal range of the filter pressure Pa of one type of filter which is used, i.e., the filter A, is a predetermined value Pa1 or less (Pa≤Pa1), the warning range is larger than the predetermined value Pa1 and less than a predetermined value Pa2 (Pa1<Pa<Pa2), and the abnormal range is the predetermined value Pa2 or more (Pa2≤Pa). On the other hand, the normal range of the filter pressure Pa of another type of filter which is used, i.e., the filter B, is a predetermined value Pa3 or less (Pa≤Pa3), the warning range is larger than the predetermined value Pa3 and less than a predetermined value Pa4 (Pa3<Pa<Pa4), and the abnormal range is the predetermined value Pa4 or more (Pa4≤Pa). Suitable normal ranges, warning ranges, and abnormal ranges are set for even the case of changing the filter which is used depending on the type of the working.

The normal range of the working fluid pressure Pb in the rough working condition is a predetermined value Pb1 or more (Pb1≤Pb), the warning range is a predetermined value Pb2 or more and less than the predetermined value Pb1 (Pb2≤Pb<Pb1), and the abnormal range is less than the predetermined value Pb2 (Pb<Pb2). On the other hand, the normal range of the working fluid pressure Pb in the finish working condition is a predetermined value Pb3 or more (Pb3≤Pb), the warning range is a predetermined value Pb4 or more and less than the predetermined value Pb3 (Pb4≤Pb<Pb3), and the abnormal range is less than the predetermined value Pb4 (Pb<Pb4). At the time of rough working, the amount of feed of the working fluid is greater than at the time of finish working, so the predetermined value Pb1 is larger than the predetermined value Pb3 and the predetermined value Pb2 is larger than the predetermined value Pb4. The normal range, warning range, and abnormal range of the working fluid pressure Pc are set equal to the working fluid pressure Pb.

The normal range of the water quality α in the rough working condition is a predetermined value α1 or more and less than a predetermined value α2 (α1≤α<α2), the warning ranges are a predetermined value α3 or more and less than the predetermined value α1 (α3≤α<α1) and the predetermined value α2 or more and less than the predetermined value α4 (α2≤α<α4), and the abnormal ranges are less than the predetermined value α3 (α<α3) and the predetermined value α4 or more (α4≤α). On the other hand, the normal range of the water quality α in the finish working condition is a predetermined value α5 or more and less than a predetermined value α6 (α5≤α<α6), the warning ranges are a predetermined value α7 or more and less than the predetermined value α5 (α7≤α<α5) and the predetermined value α6 or more and less than the predetermined value α8 (α6≤α<α8), and the abnormal ranges are less than the predetermined value α7 (α<α7) and the predetermined value α8 or more (α8≤α). The predetermined values α1, α2, α3 and α4 at the time of rough working are larger than the predetermined values α5, α6, α7 and α8 at the time of finish working.

The above ranges can be set by multiplying reference values of the physical quantities with predetermined coefficients. For example, the values obtained by multiplying the reference value Vo of the working speed V input in advance with the predetermined coefficients a1, a2, a3 and a4 are set as the predetermined values V1, V2, V3 and V4. It is also possible for the operator to directly input predetermined values through the input part 26 so as to set the ranges. The ranges of physical quantities which are set at the setting part 20b (normal ranges, warning ranges, and abnormal ranges) are stored in the memory.

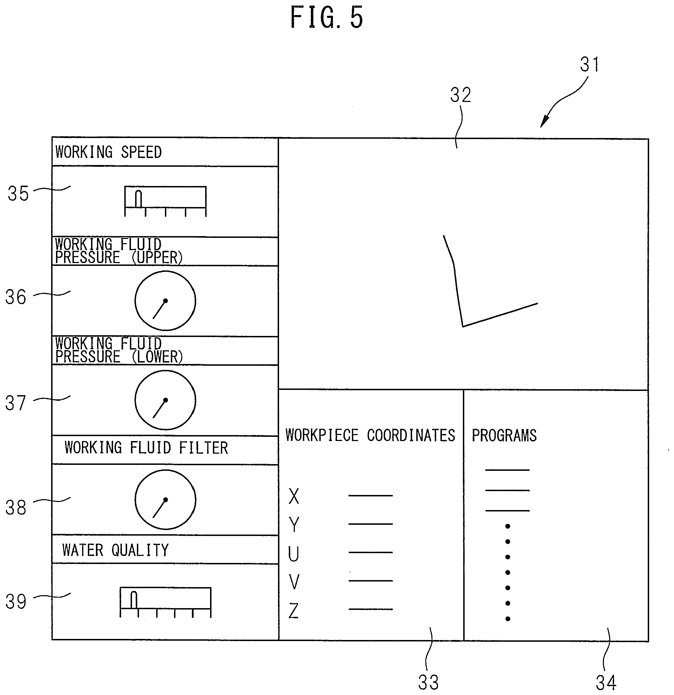

The display control part 20c uses the various data which reads through the reading part 20a and the ranges of physical quantities which are set at the setting part 20b as the basis to control the display part 30 and make predetermined images display on the display part 30. FIG. 5 is a view which shows one example of an image displayed on the display part 30 at the time of working the workpiece (workpiece working screen 31). As shown in FIG. 5, the workpiece working screen 31 has a plurality of display regions 32 to 38.

At the display region 32, a path of movement of the center of the upper head 4 (wire electrode 6) is displayed based on the signals from the rotation detectors of the X-axis use, Y-axis use, U-axis use, V-axis use, and Z-axis use servo motors. At the display region 33, the current X-coordinate, Y-coordinate, U-coordinate, V-coordinate, and Z-coordinate of the upper head 4 are displayed by numerical values based on the signals from the same rotation detectors of the servo motors. At the display region 34, the working program which is currently being run among the working programs stored in advance in the memory is displayed.

At the display region 35, the current working speed detected by the speed detector 25 is displayed. At the display region 36, the working fluid pressure Pb of the upper head side detected by the pressure detector 22 is displayed. At the display region 37, the working fluid pressure Pc of the lower head side detected by the pressure detector 23 is displayed. At the display region 38, the filter pressure Pa detected by the pressure detector 21 is displayed. At the display region 39, the water quality α detected by the water quality detector 24 is displayed.

In the present embodiment, the display regions 35 to 39 display together meter images which represent the normal ranges, the warning ranges, and the abnormal ranges of the detected values. That is, the display control part 20c judges the current working conditions based on the working program, reads the ranges of the physical quantities V, Pb, Pc, Pa and α (FIG. 4) corresponding to the working conditions from the reading part 20b, and displays the meter images at the display regions 35 to 39.

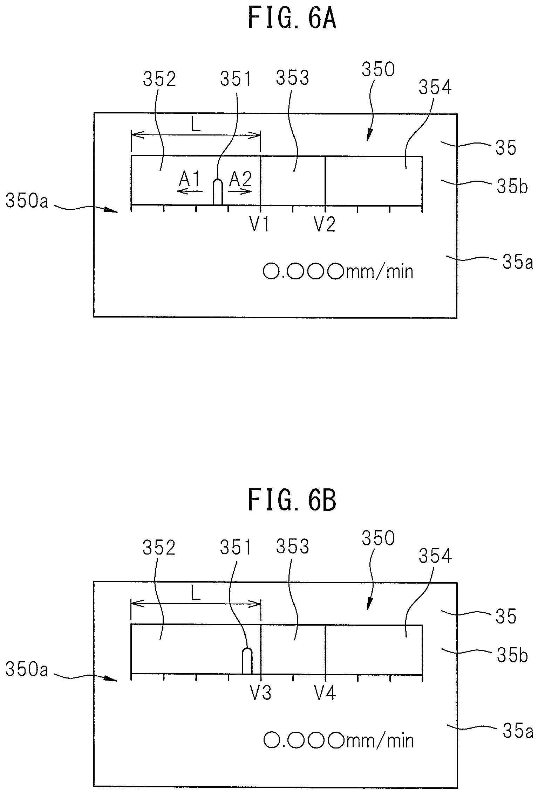

FIG. 6A and FIG. 6B are views which show images of the display region 35 at the time of rough working and at the time of finish working. As shown in FIG. 6A, at the time of rough working, the numerical value display part 35a displays the current working speed V by a numerical value, while the meter display part 35b displays a bar shaped meter image 350 which has scales 350a. The meter image 350 displays a needle image 351 having the shape of an indicator needle over this. The needle image 351 shows the detected value of the working speed V and moves in display position along the meter image 350 in the arrow A1 or A2 direction along with a change of the working speed V.

The meter image 350 is divided into three regions bordered at the predetermined values V1 and V2. The regions respectively form a normal range image 352 which corresponds to the normal range, a warning range image 353 which corresponds to the warning range, and an abnormal range image 354 which corresponds to the abnormal range. The modes of display of these images 352 to 354 differ from each other. For example, the normal range image 352 is the green color, the warning range image 353 is the yellow color, and the abnormal range image 354 is the red color. Due to this, the operator can check the position of the needle image 351 on the meter image 350 to thereby easily determine if the current working speed V is normal and how much of a margin there is until the abnormal range.

As shown in FIG. 6B, at the time of finish working as well, the numerical value display part 35a displays the current working speed V by a numerical value, and the meter display part 35b displays a meter image 350 and needle image 351. The meter image 350 is divided into the normal range image 352, the warning range image 353, and the abnormal range image 354 bordered at the predetermined values V3 and V4. The display colors of these image 352 to 354 are the same as in FIG. 6A.

The meter image 350 need to set the sizes of the normal range image 352, the warning range image 353, and the abnormal range image 354 for the scales 350a. The sizes of the normal range image 352, the warning range image 353, and the abnormal range image 354 (for example, the length L of the normal range image 352 on the screen) may also be made equal to each other between FIG. 6A and FIG. 6B. That is, the display control part 20c changes the display values of the scales 350a of the meter image 350 in accordance with the predetermined values V1 to V4 so that images 352 to 354 of constant shapes and sizes are displayed regardless of the working conditions. By configuring the system so as to display constant images 352 to 354 regardless of the working conditions in this way, the operator can easily judge the normal and abnormal state of the current working speed V. In FIG. 6A and FIG. 6B, display of the scales 350a of the meter image 350 may also be omitted. The setting of the size of the range display can also be applied to the display of other detected values.

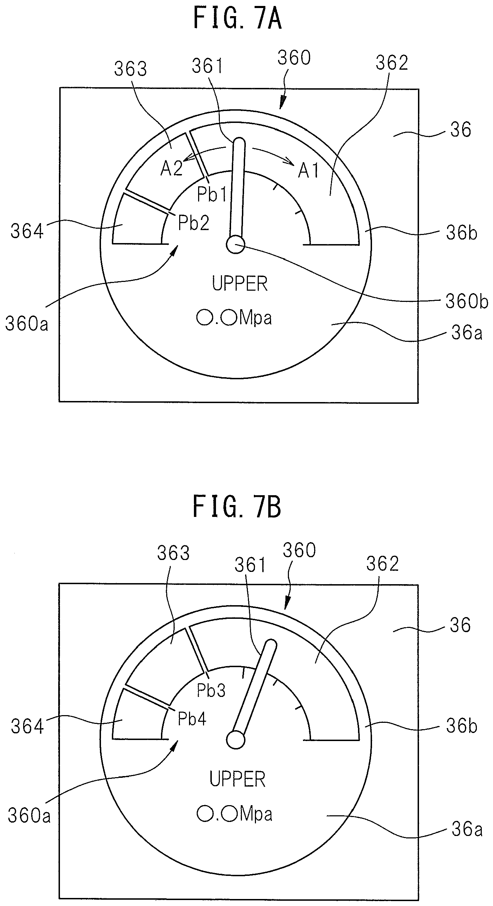

FIG. 7A and FIG. 7B are views which show images of the display region 36 at the time of rough working and finish working. As shown in FIG. 7A, at the time of rough working, the numerical value display part 36a displays the current upper head side working fluid pressure Pb by a numerical value, and the meter display part 36b displays a semicircular meter image 360 which has scales 360a. On the meter image 360, a needle image 361 which extends from the center part 360b of the semicircle in the radial direction and which is formed in the shape of the indicator needle is displayed to overlay. The needle image 361 displays the detected value of the working fluid pressure Pb, and pivots about the center part 360b in the arrow A1 or A2 direction along with a change of the working fluid pressure Pb.

The meter image 360 is divided into three regions bordered at the predetermined values Pb1 and Pb2. The regions form a normal range image 362 which corresponds to the normal range, a warning range image 363 which corresponds to the warning range, and an abnormal range image 364 which corresponds to the abnormal range. The modes of display of the images 362 to 364, like in FIG. 6A, differ from each other. That is, the normal range image 362 is the green color, the warning range image 363 is the yellow color, and the abnormal range image 364 is the red color. Due to this, the operator can easily determine if the current working fluid pressure Pb is normal.

As shown in FIG. 7B, at the time of finish working as well, the numerical value display part 36a displays the current working fluid pressure Pb by a numerical value and the meter display part 36b displays a meter image 360 and needle image 361. The meter image 360 is divided into a normal range image 362, a warning range image 363, and an abnormal range image 364 bordered at the predetermined values Pb3 and Pb4. The display colors of these images are the same as in FIG. 7A.

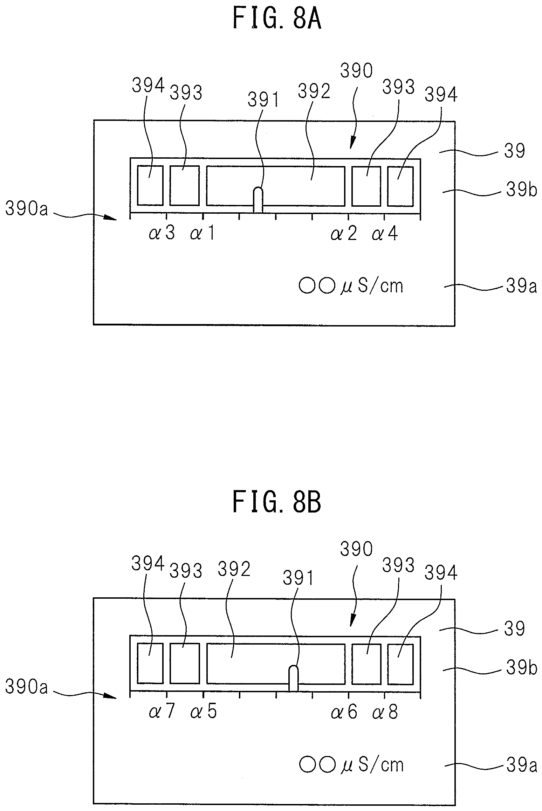

FIG. 8A and FIG. 8B are views which show images of the display region 39 at the time of rough working and finish working. As shown in FIG. 8A, at the time of rough working, the numerical value display part 39a displays the current water quality α by a numerical value and the meter display part 39b displays a bar shaped meter image 390 which has scales 390a. The meter image 390 is displayed with a needle image 391 of the shape of an indicator needle overlaid on it. The needle image 391 shows the detected value of the water quality α. The display position moves along the meter image 390 along with a change of the water quality α.

In the water quality α, unlike in the working speed V, etc., abnormal ranges and warning ranges are set at the two sides of a normal range. Corresponding to this, the meter image 390 is divided into five regions bordered at the predetermined values α1 to α4. At the two sides of the normal range image 392, warning range images 393 are displayed, while at the two sides of the warning range images 393, abnormal range images 394 are displayed. The modes of display of the images 392 to 394 differ from each other. For example, the normal range image 392 is the green color, the warning range images 393 are the yellow color, and the abnormal range images 394 are the red color. Due to this, the operator can easily determine if the current water quality α is normal.

As shown in FIG. 8B, even at the time of the finish working, the numerical value display part 39a displays the current water quality α by a numerical value and the meter display part 39b displays a meter image 390 and needle image 391. The meter image 390 is divided into a normal range image 362, warning range images 363, and abnormal range images 364 bordered at predetermined values α5 to α8. The display colors of these images are the same as in FIG. 8A.

According to the present embodiment, the following actions and effects can be exhibited.
(1) As the physical quantities showing the state of the wire electro-discharge machine, the working speed V is detected by the speed detector 25, the filter pressure Pa is detected by the pressure detector 21, the working fluid pressures Pb and Pc are detected by the pressure detectors 22 and 23c, and the water quality α is detected by the water quality detector 24. Further, the normal ranges of the working speed V, the filter pressure Pa, the working fluid pressures Pb and Pc, and the water quality α in accordance with the working conditions are set in advance by the processing at the setting part 20b, while the detected values of these physical quantities together with their normal ranges are displayed on the display part 30 by the processing at the display control part 20c. Due to this, the operator can view the display of the display part 30 and easily judge if the wire electro-discharge machine is normal in state.
(2) By the processing at the display control part 20c,the normal range images 352, 362 and 392 which define the normal ranges set by the setting part 20b are displayed and the images of the detected values (needle images) corresponding to the normal range images 352, 362 and 392 are displayed. That is, the needle images 351, 361 and 391 are displayed on the meter images 350, 360 and 390 which include the normal range images 352, 362 and 392. Due to this, the operator can easily determine if the physical quantities which represent the state of the wire electro-discharge machine are in the normal ranges or not, without referring to the numerical values displayed at the numerical value display parts 35a, 36a and 39a.
(3) By the processing at the display control part 20c, the values of the scales of the meter images 350, 360 and 390 are changed in accordance with the rough working, finish working, and other working conditions, and the normal range images 352, 362 and 392 are displayed at the display part 30 by the same shapes and sizes regardless of the working conditions. Due to this, needle image 351, 361 and 391 are displayed on the same meter images 350, 360 and 390 regardless of the working conditions, so even if the working conditions change, the operator can easily determine whether the machine is normal in state.
(4) By the processing at the setting part 20b, the warning ranges are set contiguous to the normal ranges of the physical quantities and the abnormal ranges are set contiguous to the warning ranges. Further, by the processing at the display control part 20c, along with the normal range images 352, 362 and 392, warning range images 353, 363 and 393 which define warning ranges and abnormal range images 354, 364 and 394 which define abnormal ranges are displayed. By displaying the warning range images 353, 363 and 393 in this way, it is possible to issue a warning to the operator before the wire electro-discharge machine reaches an abnormal state and prevent abnormalities in the machine in advance.
(5) The normal range images 352, 362 and 392, the warning range images 353, 363 and 393, and the abnormal range image 354, 364 and 394 are displayed by display colors different from each other. Due to this, the operator can clearly distinguish between the normal ranges, the warning ranges, and the abnormal ranges and can easily recognize the current state of the wire electro-discharge machine.

In the above embodiment, by the processing at the display control part 20c, meter images 350, 360 and 390 and needle images 351, 361 and 391 are displayed at the display part 30. However, so long as controlling the display part 30 so as to display detected values of physical quantities which represent the state of the machine tool and normal ranges of the physical quantities set by the setting part 20b, the display control part 20c may be configured in any way. For example, the meter images 350, 360 and 390 may also display only the normal ranges of the physical quantities or may display only the normal ranges and the abnormal ranges. In this case, it is also possible to use the setting part 20b to set only the normal ranges and to deem the ranges other than the normal ranges the abnormal ranges. Alternatively, it is also possible to use the setting part 20b to set only the abnormal ranges and to deem the ranges other than the abnormal ranges the normal ranges.

The displays of the numerical value display parts 35a, 36a and 39a (FIG. 6A, FIG. 6B, FIG. 7A, FIG. 7B, FIG. 8A and FIG. 8B) may also be omitted. In the above embodiment, the meter images 350, 360 and 390 are made bar shaped or semicircular shaped, but the meter images are not limited to these shapes. So long as being displayed corresponding to the normal range images 352, 362 and 392, the images of the detected values (needle images 351, 361 and 391) are also not limited to the above-mentioned shapes. The normal range images 352, 362 and 392, the warning range images 353, 363 and 393, and the abnormal range images 354, 363 and 394 are changed in display color from each other. However, so long as changing the modes of display from each other, the display colors may also be made the same.

The values of the scales 350a, 360a and 390a of the meter images 350, 360 and 390 are made constant, and the normal range images 352, 362 and 392 are displayed by different sizes when the working conditions is changed. However, it is also possible to display the normal range images 352, 362 and 392 by the same sizes regardless of the working conditions at the display regions 35, 36 and 39. The meter images 350, 360 and 390 are displayed at the display part 30. However, instead of displaying the meter images 350, 360 and 390, it is also possible, for example, to attach mechanical type meters to the display part 30. Therefore, the display part 30 may also display something other than images.

In the above embodiment, as the physical quantities which represent the state of the machine tool, the working speed V, working fluid pressures Pb and Pc, filter pressure Pa, and water quality α are displayed, but the detected value T of the temperature detector 25 may also be displayed. Other physical quantities whose normal ranges change in accordance with the working conditions may also be detected. The configuration of the detecting part is not limited to the one described above.

Above, a machine tool constituted by a wire electro-discharge machine is used, but the present invention can be similarly applied even to another machine tool where normal ranges of the physical quantities which represent the state of the machine tool change in accordance with the working conditions.

According to the present invention, the detected values of physical quantities which change in normal ranges in accordance with the working conditions and the normal ranges of the physical quantities are displayed at the display part, so the operator can easily judge if the machine is normal in state.

### REFERENCE SIGNS LIST

- 20: control device
- 20b: setting part
- 20c: display control part
- 21 to 24: pressure detector
- 25: speed detector
- 30: display part
- 100: wire electro-discharge machine
- 350, 360, 390: meter image
- 351, 361, 391: needle image
- 352, 362, 392: normal range image
- 353, 363, 393: warning range image
- 354, 364, 394: abnormal range image

## Claims

1. A machine tool, comprising:
a detecting part (21-25) configured to detect a physical quantity representing a state of a machine tool, a normal range of the physical quantity changing in accordance with working conditions;
a setting part (20b) configured to set a normal range, a warning range and an abnormal range of the physical quantity in accordance with the working conditions, wherein the warning range is contiguous with the normal range and the abnormal range is contiguous with the warning range;
a display part (30) configured to display a detected value detected by the detecting part (21-25), the normal range, the warning range and the abnormal range set by the setting part (20b); and
a display control part (20c) configured to judge the working conditions of a machining which is being carried out in accordance with a working program,
**characterized in that**
the display control part (20c) is configured to control the display part (30) so that it displays together a normal range image (352, 362, 392), a warning range image (353, 363, 393) and an abnormal range image (354, 364, 394) defining the normal range, the warning range and the abnormal range, respectively, capable of being set by the setting part (20b) and a needle image (351, 361, 391) of the detected value detected by the detecting part (21-25) on a meter image (350, 360, 390) including the range images (352, 362, 392, 353, 363, 393, 354, 364, 394).

2. The machine tool according to claim 1, wherein the display control part (20c) is configured to change the meter image (350, 360, 390) in accordance with the judged working conditions.

3. The machine tool according to claim 2, wherein the display control part (20c) is configured to control the display part (30) so that it displays each of the range images (352, 362, 392, 353, 363, 393, 354, 364, 394) by a same size regardless of the working conditions.

4. The machine tool according to claim 1, wherein the display control part (20c) is configured to control the display part (30) so that it displays the normal range image (352, 362, 392), the warning range image (353, 363, 393), and the abnormal range image (354, 364, 394) by display modes different from each other.

5. The machine tool according to claim 1, wherein the working conditions include a rough working condition at the time of rough working and a finish working condition at the time of finish working.

## Patentansprüche

1. Werkzeugmaschine, umfassend:
ein Erfassungsteil (21-25), das dazu ausgestaltet ist, eine physikalische Menge, die einen Zustand einer Werkzeugmaschine darstellt, zu erfassen, wobei sich ein Normalbereich der physikalischen Menge anhand von Arbeitsbedingungen ändert;
ein Einstellteil (20b), das dazu ausgestaltet ist, einen Normalbereich, einen Warnbereich und einen abnormalen Bereich der physikalischen Menge gemäß den Arbeitsbedingungen einzustellen, wobei der Warnbereich an den Normalbereich angrenzt und der abnormale Bereich an den Warnbereich angrenzt;
ein Anzeigeteil (30), das dazu ausgestaltet ist, einen erfassten Wert, der von dem Erfassungsteil (21-25) erfasst wird, den Normalbereich, den Warnbereich und den abnormalen Bereich, die von dem Einstellteil (20b) eingestellt werden, anzuzeigen; und
ein Anzeigesteuerteil (20c), das dazu ausgestaltet ist, die Arbeitsbedingungen einer Bearbeitung einzuschätzen, die gemäß einem Arbeitsprogramm ausgeführt wird,
**dadurch gekennzeichnet, dass**
das Anzeigesteuerteil (20c) dazu ausgestaltet ist, das Anzeigeteil (30) so zu steuern, dass es zusammen ein Normalbereichsbild (352, 362, 392), ein Warnbereichsbild (353, 363, 393) und ein Bild eines abnormalen Bereichs (354, 364, 394) anzeigt, die jeweils den Normalbereich, den Warnbereich und den abnormalen Bereich definieren, die von dem Einstellteil (20b) eingestellt werden können, und ein Nadelbild (351, 361, 391) des erfassten Werts, der von dem Erfassungsteil (21-25) erfasst wird, auf einem Messgerätbild (350, 360, 390), das die Bereichsbilder (352, 362, 392, 353, 363, 393, 354, 364, 394) umfasst.

2. Werkzeugmaschine nach Anspruch 1, wobei das Anzeigesteuerteil (20c) dazu ausgestaltet ist, das Messgerätbild (350, 360, 390) gemäß den eingeschätzten Arbeitsbedingungen zu ändern.

3. Werkzeugmaschine nach Anspruch 2, wobei das Anzeigesteuerteil (20c) dazu ausgestaltet ist, das Anzeigeteil (30) so zu steuern, dass es jedes der Bereichsbilder (352, 362, 392, 353, 363, 393, 354, 364, 394) durch eine selbe Größe unabhängig von den Arbeitsbedingungen anzeigt.

4. Werkzeugmaschine nach Anspruch 1, wobei das Anzeigesteuerteil (20c) dazu ausgestaltet ist, das Anzeigeteil (30) so zu steuern, dass es das Normalbereichsbild (352, 362, 392), das Warnbereichsbild (353, 363, 393) und das Bild des abnormalen Bereichs (354, 364, 394) durch Anzeigemodi anzeigt, die sich voneinander unterscheiden.

5. Werkzeugmaschine nach Anspruch 1, wobei die Arbeitsbedingungen eine raue Arbeitsbedingung zum Zeitpunkt des rauen Arbeitens und eine Endbearbeitungs-Arbeitsbedingung zum Zeitpunkt der Endbearbeitung umfassen.

## Revendications

1. Machine-outil, comprenant :
une partie (21-25) de détection configurée pour détecter une quantité physique représentant un état d'une machine-outil, une plage normale de la quantité physique changeant en fonction de conditions de travail ;
une partie (20b) de paramétrage configurée pour paramétrer une plage normale, une plage d'avertissement et une plage anormale de la quantité physique en fonction des conditions de travail, dans lequel la plage d'avertissement est contiguë à la plage normale et la plage anormale est contiguë à la plage d'avertissement ;
une partie (30) d'affichage configurée pour afficher une valeur détectée, détectée par la partie (21-25) de détection, la plage normale, la plage d'avertissement et la plage anormale paramétrées par la partie (20b) de paramétrage ; et
une partie (20c) de commande d'affichage configurée pour juger les conditions de travail d'un usinage qui est en cours d'exécution en fonction d'un programme de travail,
**caractérisée en ce que**
la partie (20c) de commande d'affichage est configurée pour commander la partie (30) d'affichage de manière à ce qu'elle affiche ensemble une image de plage normale (352, 362, 392), une image de plage d'avertissement (353, 363, 393) et une image de plage anormale (354, 364, 394) définissant la plage normale, la plage d'avertissement et la plage anormale, respectivement, aptes à être paramétrées par la partie (20b) de paramétrage et une image d'aiguille (351, 361, 391) de la valeur détectée par la partie (21-25) de détection sur une image de dispositif de mesure (350, 360, 390) incluant les images de plages (352, 362, 392, 353, 363, 393, 354, 364, 394).

2. Machine-outil selon la revendication 1, dans laquelle la partie (20c) de commande d'affichage est configurée pour changer l'image de dispositif de mesure (350, 360, 390) en fonction des conditions de travail jugées.

3. Machine-outil selon la revendication 2, dans laquelle la partie (20c) de commande d'affichage est configurée pour commander la partie (30) d'affichage de manière à ce qu'elle affiche chacune des images de plages (352, 362, 392, 353, 363, 393, 354, 364, 394) par une même taille quelles que soient les conditions de travail.

4. Machine-outil selon la revendication 1, dans laquelle la partie (20c) de commande d'affichage est configurée pour commander la partie (30) d'affichage de manière à ce qu'elle affiche l'image de plage normale (352, 362, 392), l'image de plage d'avertissement (353, 363, 393), et l'image de plage anormale (354, 364, 394) par des modes d'affichage différents les uns des autres.

5. Machine-outil selon la revendication 1, dans laquelle les conditions de travail incluent une condition de travail de dégrossissage au moment du dégrossissage et une condition de travail de finition au moment de la finition.
